# EUROPÄISCHE PATENTSCHRIFT

(11) **EP 4 415 982 B1**
(45) Veröffentlichungstag und Bekanntmachung des Hinweises auf die Patenterteilung: **09.12.2026**
(21) Anmeldenummer: 22800689.6
(22) Anmeldetag: 12.10.2022
(51) Int. Cl.: B60C 23/04

(54) **VERFAHREN ZUR AUTOLOKALISIERUNG VON SENSOREN IN ODER AN FAHRZEUGEN**
AUTO-LOCATION METHOD FOR SENSORS IN OR ON VEHICLES
PROCÉDÉ DE LOCALISATION AUTOMATIQUE POUR CAPTEURS DANS OU SUR DES VÉHICULES

(30) Priorität: 13.10.2021 DE 102021211563
(43) Veröffentlichungstag der Anmeldung: 21.08.2024
(73) Patentinhaber: Robert Bosch GmbH, 70442 Stuttgart (DE)
(72) Erfinder: HAJJI, Ouael, 70178 Stuttgart (DE)
(86) Internationale Anmeldenummer: PCT/EP2022/078333
(87) Internationale Veröffentlichungsnummer: WO 2023/062051

(56) Entgegenhaltungen:
- US-A1- 2010 191 409
- US-A1- 2014 167 950

## Beschreibung

### Stand der Technik

Die Erfindung betrifft ein Verfahren zur Autolokalisierung von Sensoren in oder an Fahrzeugen, insbesondere von TPMS-Sensoren.

Die Erfindung betrifft weiter ein System zur Autolokalisierung von Sensoren in oder an Fahrzeugen, insbesondere von TPMS-Sensoren.

Die Erfindung betrifft darüber hinaus ein Fahrzeug mit einem System.

Obwohl die vorliegende Erfindung allgemein auf beliebige Sensoren anwendbar ist, wird die vorliegende Erfindung in Bezug auf TPMS-Sensoren an Reifen eines Fahrzeugs beschrieben.

In Reifendruckkontrollsystemen, kurz TPMS-Systemen, die eine unidirektionale Kommunikation zwischen einer Zentraleinheit und den TPMS-Sensoren verwenden, basiert die Autolokalisierungsfunktion auf den Daten der Rückblickzeit - englisch look-back time - oder der Umdrehungsperiode des Rades, die von einem Sensor, der am Reifen angeordnet ist an einen Empfänger am oder im Fahrzeug gesendet werden. Dies erfolgt asynchron, wenn der Sensor die notwendigen Bedingungen für die Autolokalisierung erkennt, und dauert in der Regel mehrere Minuten, da es keine Rückmeldung vom Empfänger gibt. Der Empfänger erkennt ebenfalls die notwendigen Bedingungen für die Autolokalisierung und beginnt mit der Erfassung der Sensordaten, die er mit anderen Reifenumdrehungsdaten des Fahrzeugs korreliert, um jedem TPMS-Sensor eine Position am Fahrzeug zuzuweisen.

Die Autolokalisierung in den unidirektionalen Kommunikationssystemen (Sensor zu Fahrzeug-Empfänger) dauert sehr lange und wird von vielen Parametern beeinflusst. So hängen die Abtastraten des TPMS-Sensors stark von der Fahrzeuggeschwindigkeit und der Felgengröße ab. Der Straßenzustand, das Fahrverhalten und sogar ein eventueller Montagefehler des TPMS-Sensors haben einen großen Einfluss auf die TPMS-Sensor-Berechnung der Beschleunigungssignale in Werte wie Look-back-Zeit und/oder Umdrehungsdauer, die vom Empfänger verwendet werden, um jedem Sensor einen Standort zuzuordnen. Hierzu wird in einem Benutzerhandbuch für Fahrzeuge, die diese Methode verwenden, der Fahrzeugnutzer regelmäßig aufgefordert, mit dem Fahrzeug eine 20-minütige Fahrt zu unternehmen, bei der der Fahrzeugnutzer oft aufgefordert wird, eine niedrige Fahrgeschwindigkeit, beispielsweise unter 25 km/h einzuhalten. Dies ist äußerst aufwendig und nutzerunfreundlich, insbesondere, weil dieser Vorgang eine entsprechend lange Zeit benötigt. Darüber hinaus können die jeweiligen Bedingungen für den Beginn der Autolokalisierung ungünstig sein. Ebenso werden die Sensordaten kontinuierlich erfasst und verarbeitet. Dies hat zur Folge, dass ein erheblicher Teil der für die Sensoren verfügbaren Energie für die Autolokalisierung verbraucht wird, da dieser Vorgang typischerweise bei jedem Übergang des Fahrzeugs vom Ruhezustand, also einem langen Stillstand, in den Fahrzustand stattfindet.

Verfahren zur Autolokaisierung von Sensoren in oder an Fahrzeugen sind beispielsweise aus den Offenlegungsschriften US 2010/191409 A1 sowie US 2014/167950 A1 bekannt.

### Offenbarung der Erfindung

In einer Ausführungsform stellt die vorliegende Erfindung ein Verfahren zur Autolokalisierung von Sensoren in oder an Fahrzeugen, insbesondere von TPMS-Sensoren, bereit, umfassend die Schritte
- Herstellen einer bidirektionalen Kommunikation zwischen einer Zentraleinheit und zumindest einem Sensor,
- Ermitteln von Trigger-Daten für die Autolokalisierung des zumindest einen Sensors basierend auf Fahrzeugzustandsdaten, die der Zentraleinheit von zumindest einer weiteren Fahrzeugeinheit bereitgestellt werden,
- Übermitteln der Trigger-Daten an den zumindest einen Sensor,
- Initiieren der Autolokalisierung durch die Zentraleinheit basierend auf den Trigger-Daten, wobei der Sensor Sensordaten für die Autolokalisierung ermittelt, und
- Ermitteln der Position des zumindest einen Sensors basierend auf den ermittelten Sensordaten.

In einer Ausführungsform stellt die vorliegende Erfindung ein System zur Autolokalisierung von Sensoren in oder an Fahrzeugen, insbesondere von TPMS-Sensoren, bereit, umfassend
eine Zentraleinheit,
eine Fahrzeugeinheit, und
zumindest einen Sensor, insbesondere einen Beschleunigungs- und/oder Drehratensensor, wobei eine bidirektionale Kommunikation zwischen der Zentraleinheit und dem zumindest einen Sensor herstellbar ist, und wobei die Zentraleinheit ausgebildet ist, Trigger-Daten für die Autolokalisierung des zumindest einen Sensors basierend auf Fahrzeugzustandsdaten, die der Zentraleinheit von der Fahrzeugeinheit bereitgestellt werden, zu ermitteln, die Trigger-Daten an den zumindest einen Sensor zu übermitteln, die Autolokalisierung basierend auf den Trigger-Daten, wobei der Sensor Sensordaten für die Autolokalisierung ermittelt, zu initiieren, und die Position des zumindest einen Sensors basierend auf ermittelten Sensordaten zu ermitteln, und wobei der zumindest eine Sensor ausgebildet ist, Trigger-Daten von der Zentraleinheit zu empfangen, Sensordaten für die Autolokalisierung zu ermitteln nach dem Initiieren und ermittelte Sensordaten an die Zentraleinheit zu übertragen.

In einer Ausführungsform stellt die vorliegende Erfindung ein Fahrzeug mit einem System gemäß Anspruch 8 bereit.

Einer der damit erzielten Vorteile ist eine verbesserte Autolokalisierung des zumindest einen Sensors, da der Sensor die erforderlichen Parameter zur Verfügung gestellt bekommt und so die Komplexität seiner Berechnungen und die Abhängigkeit von Fahrzeug- und Radparametern verringert wird. Darüber hinaus wird Energie insgesamt eingespart, da geeignete Bedingungen für die Autolokalisierung mittels der Zentraleinheit berechnet werden und die Autolokalisierung dann während dieser Bedingungen durchgeführt wird.

Weitere Merkmale, Vorteile und weitere Ausführungsformen der Erfindung sind im Folgenden beschrieben oder werden dadurch offenbart.

Erfindungsgemäß wird ein Zeitfenster zum Initiieren der Autolokalisierung ermittelt und anhand des ermittelten Zeitfensters wird eine Abtastrate für den Sensor ermittelt, die dem Sensor zur Ermittlung der Sensordaten mit der Abtastrate bereitgestellt wird. Damit wird der Energieverbrauch insbesondere sensorseitig gesenkt, da in einem verbesserten, wenn nicht gar optimalen Zeitfenster der Sensorwert für die Autolokalisierung ermittelt wird.

Gemäß einer weiteren vorteilhaften Weiterbildung der Erfindung wird die Abtastrate anhand von Fahrzeugzustandsdaten, insbesondere anhand von Fahrzeugbewegungsdaten, ermittelt. Vorteil hiervon ist, dass auf einfache und zuverlässige Weise eine geeignete Abtastrate ermittelt werden kann.

Gemäß einer weiteren vorteilhaften Weiterbildung der Erfindung wird ein Übermitteln von Daten zwischen Sensor und Zentraleinheit jeweils von der empfangenden Seite der Sendeseite bestätigt. Einer der damit erzielten Vorteile ist eine Erhöhung der Zuverlässigkeit bei der Autolokalisierung.

Gemäß einer weiteren vorteilhaften Weiterbildung der Erfindung erfolgt das Initiieren der Autolokalisierung anhand einer von der Zentraleinheit dem Sensor bereitgestellten Information, insbesondere eines Flags. Damit kann auf besonders einfache und gleichzeitig zuverlässige Weise die Autolokalisierung initiiert werden.

Gemäß einer weiteren vorteilhaften Weiterbildung der Erfindung werden die Sensordaten des Sensors solange an die Zentraleinheit übermittelt, bis die Position des Sensors mit vorgegebener Genauigkeit ermittelt wurde. Damit werden unnötige Berechnungen für die Ermittlung der Position des Sensors vermieden.

Gemäß einer weiteren vorteilhaften Weiterbildung der Erfindung wird nach erfolgter Ermittlung der Position des Sensors die bidirektionale Kommunikation abgeschaltet. Damit kann auf einfache Weise Energie eingespart werden.

Gemäß einer weiteren vorteilhaften Weiterbildung der Erfindung wird der Sensor als Inertialmesssensor, insbesondere in Form eines Beschleunigungssensors und/oder eines Dreh-ratensensors, bereitgestellt. Mittels einen solchen Sensors lassen sich einfach und zuverlässig geeignete Daten für die Autolokalisierung erhalten.

Weitere wichtige Merkmale und Vorteile der Erfindung ergeben sich aus den Unteransprüchen, aus den Zeichnungen und aus der dazugehörigen Figurenbeschreibung anhand der Zeichnungen.

Bevorzugte Ausführungen und Ausführungsformen der vorliegenden Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile oder Elemente beziehen.

Dabei zeigt
- Figur 1: Schritte eines Verfahrens gemäß einer Ausführungsform der vorliegenden Erfindung;
- Figur 2: Schritte eines Verfahrens gemäß einer Ausführungsform der vorliegenden Erfindung; und
- Figur 3: ein System gemäß einer Ausführungsform der vorliegenden Erfindung in schematischer Form.

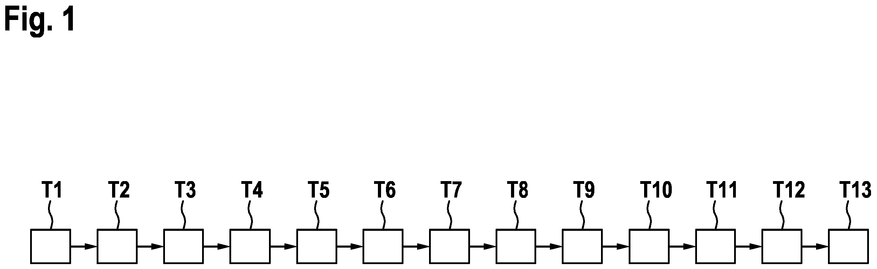

Figur 1 zeigt Schritte eines Verfahrens gemäß einer Ausführungsform der vorliegenden Erfindung.

In Figur 1 sind Schritte eines Verfahrens zur Autolokalisierung eines Sensors eines Systems in einem Fahrzeug gezeigt, welches den Sensor, hier einen TPMS-Sensor und eine Zentraleinheit umfasst.

In einem ersten Schritt T1 wird durch eine Zentraleinheit, die im Folgenden auch als Gateway bezeichnet wird, erkannt, dass eine Autolokalisierung durchzuführen ist. Dies ist beispielsweise dann der Fall, wenn das Fahrzeug lange nicht bewegt wurde, das heißt, das Fahrzeug vollführt einen Übergang von einem langen Stillstand in einen Fahrzustand. Die Zentraleinheit beginnt somit nach verbindbaren TPMS-Sensoren in der näheren Umgebung zu suchen.

In einem weiteren Schritt T2 wird durch den Sensor, der insbesondere als ein Beschleunigungssensor ausgebildet ist, ebenfalls erkannt, dass eine Autolokalisierung durchzuführen ist. Der Sensor beginnt mit dem Senden von Verbindungsanzeigen, ohne jedoch zunächst Beschleunigungsmessungen vorzunehmen.

In einem weiteren Schritt T3 stellt die Zentraleinheit eine Verbindung mit einem oder mehreren verbindbaren TPMS-Sensoren her.

In einem weiteren Schritt T4 nutzt die Zentraleinheit Eingangsdaten, beispielsweise von einem Steuergerät des Fahrzeugs, wie beispielsweise ABS, ESP, Blinkersteuerung, Lenkungssteuerung, engl. Steering ECU, und dergleichen, um ein optimales Zeitfenster für den Beginn der Autolokalisierung zu ermitteln. Ein optimales Fenster ist beispielsweise dann gegeben, wenn die Straße keine Unebenheiten aufweist und wenn das Fahrzeug eine Kurve fährt.

In einem weiteren Schritt T5 wird, sobald die Zentraleinheit das optimale Zeitfenster identifiziert hat, die Beschleunigungsabtastrate mittels bidirektionaler Kommunikation an den TPMS-Sensor übertragen. Die Beschleunigungsabtastrate wird insbesondere aus der aktuellen Fahrzeuggeschwindigkeit des Fahrzeugs abgeleitet, kann aber alternativ oder zusätzlich auch aus anderen bereitgestellten Informationen über die Fahrzeugbewegung und Fahrbedingungen abgeleitet werden. Die Beschleunigungsabtastrate kann als Frequenz, Periode oder in einem anderen Format vorliegen oder entsprechend umgewandelt werden.

In einem weiteren Schritt T6 bestätigt der TPMS-Sensor die erhaltene Beschleunigungsabtastrate der Zentraleinheit respektive dem Gateway.

In einem weiteren Schritt T7 setzt die Zentraleinheit ein Flag "Start Autolokalisierung" für den TPMS-Sensor.

In einem weiteren Schritt T8 bestätigt der TPMS-Sensor das bereitgestellte "Start Autolokalisierung"-Flag und beginnt die Abtastung mit der konfigurierten Abtastrate.

In einem weiteren Schritt T9 nutzt der TPMS-Sensor seine Benachrichtigungsfunktion, um kontinuierlich die berechnete "Reifenumdrehungszeit" zu ermitteln, bis er die Anweisung zum Stoppen durch das Gateway erhält. Ebenso ist es denkbar, mehrere Werte für die "Reifenumdrehungszeit" zu berechnen und zu übermitteln je nach entsprechender Implementierung beziehungsweise Realisierung. Der Parameter "Reifenumdrehungszeit" kann als Frequenz, Periode oder in einem anderen Format vorliegen oder entsprechend umgewandelt werden.

In einem weiteren Schritt T10 entfernt die Zentraleinheit, wenn die Zentraleinheit die Ermittlung der Position des Sensors beendet hat, also beispielsweise vorne rechts, vorne links, hinten rechts, hinten links in Bezug auf den TPMS-Sensor, mit dem es kommuniziert, das Flag "Start Autolokalisierung".

In einem weiteren Schritt T11 bestätigt der TPMS-Sensor das entfernte "Start Autolokalisierung"-Flag, und die Beschleunigungsabtastung wird beendet.

In einem weiteren Schritt T12, der optional ist, trennt die Zentraleinheit die Verbindung mit dem TPMS-Sensor, dessen Position bereits ermittelt wurde.

In einem weiteren Schritt T13 wird die Verbindung zwischen TPMS-Sensor und Zentraleinheit getrennt und der TPMS-Sensor geht in den Standard-Modus über und stellt wieder Reifendruckdaten zur Verfügung.

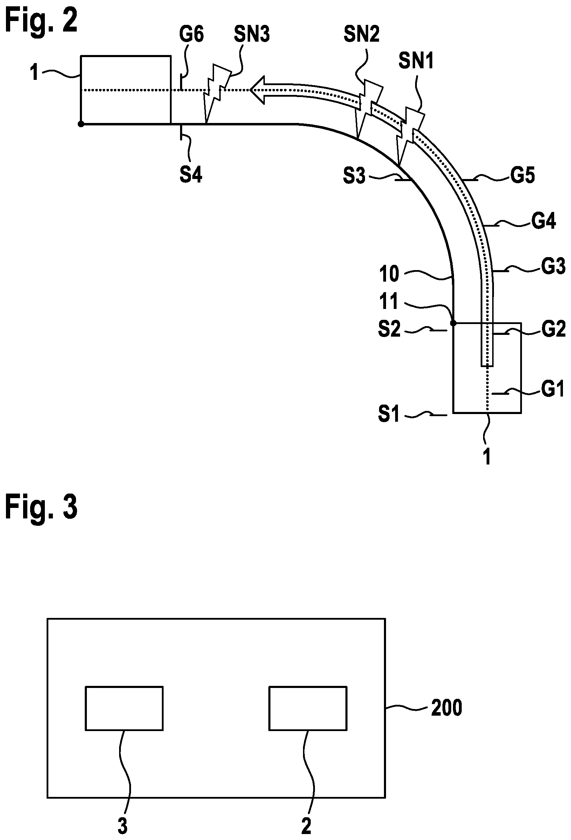

Figur 2 zeigt Schritte eines Verfahrens gemäß einer Ausführungsform der vorliegenden Erfindung.

In Figur 2 ist der Weg 10 des vorderen linken Rades 11 eines Fahrzeugs 3 gezeigt, welches eine 90-Grad Linkskurve durchführt. In der Ausgangsstellung des Fahrzeugs - unten rechts in Figur 2 - wird der Sensor 2 in einem Schritt S1 in den Zustand zur Aufnahme einer Verbindung mit einer Zentraleinheit versetzt. Gleichzeitig scannt die Zentraleinheit 3 in einem Schritt G1 zeitlich nach dem Schritt S1 nach zu verbindenden Sensoren in ihrer Nähe. In dem hier vorliegenden Ausführungsbeispiel erfolgt nun die erfolgreiche Verbindungsaufnahme in einem Schritt G2. Der Sensor stellt dann in einem Schritt S2 fest, dass er nun mit der Zentraleinheit 3 verbunden ist. Im weiteren Verlauf der durchfahrenden Kurve überprüft nun die Zentraleinheit 3 in einem Schritt G3, ob die Bedingungen für eine Autolokalisierung des Sensors vorliegen. Diese wird konfiguriert in einem Schritt G4 und initiiert in einem Schritt G5. Der Sensor führt nun in einem Schritt S3 die Autolokalisierung durch, in dem der Sensor kontinuierlich Daten für die Autolokalisierung der Zentraleinheit bereitstellt. In den Schritten SN1-SN3 werden die entsprechenden Daten der Zentraleinheit zur Verfügung gestellt.

Die Autolokalisierung wird dann durch den Sensor in einem Schritt S4 beendet. Die Zentraleinheit 3 beendet ebenfalls die Berechnungen der Position des Sensors und die Autolokalisierung insgesamt, wenn die Position des Sensors bestimmt werden konnte.

Figur 3 ein System gemäß einer Ausführungsform der vorliegenden Erfindung in schematischer Form.

In Figur 3 ist ein System 100 zur Autolokalisierung von Sensoren in oder an Fahrzeugen, insbesondere von TPMS-Sensoren, gezeigt.

Das System 100 ist in einem Fahrzeug angeordnet und umfasst eine Zentraleinheit 3, und zumindest einen Sensor 2, insbesondere einen Beschleunigungs- und/oder Drehratensensor, wobei eine bidirektionale Kommunikation zwischen der Zentraleinheit 3 und dem zumindest einen Sensor 2 herstellbar ist, und wobei die Zentraleinheit 3 ausgebildet ist, Trigger-Daten für die Autolokalisierung basierend auf Fahrzeugzustandsdaten, die der Zentraleinheit 3 bereitgestellt werden, zu ermitteln, die Trigger-Daten an den zumindest einen Sensor 2 zu übermitteln, die Autolokalisierung basierend auf den Trigger-Daten, wobei der Sensor Sensordaten für die Autolokalisierung ermittelt, zu initiieren, und die Position des zumindest einen Sensors 2 basierend auf ermittelten Sensordaten zu ermitteln, und wobei der zumindest eine Sensor 2 ausgebildet ist, Trigger-Daten von der Zentraleinheit 3 zu empfangen, Sensordaten für die Autolokalisierung zu ermitteln nach dem Initiieren und ermittelte Sensordaten an die Zentraleinheit 3 zu übertragen.

Zusammenfassend weist zumindest eine der Ausführungsformen die folgenden Merkmale und/oder Vorteil auf:
- Einfache Sensoren möglich. Es reicht beispielsweise ein einfacher Beschleunigungssensor.
- Schnelle und einfachere Bestimmung der Position des Sensors.
- Energieersparnis.
- Hoher Grad an Unabhängigkeit von stark beeinflussenden Parametern wie unterschiedlichen Felgen, Felgengrößen und Montagemängel des TPMS-Sensors.

Mit anderen Worten wird bei zumindest einer der Ausführungsformen nur die Achse der Gravitationsbeschleunigung für die Autolokalisierung benötigt, da der TPMS-Sensor die Beschleunigungsabtastrate von der Zentraleinheit erhält und sie nicht aus der Zentrifugalbeschleunigungsachse berechnen muss. Die Autolokalisierung erfolgt auf Anfrage und mit kontinuierlicher Rückmeldung von der Zentraleinheit, wenn ein optimales Fenster erkannt wird. Dieses ist schneller und zuverlässiger als bisher bekannte Implementierungen. Die synchrone Ausführung der Autolokalisierungsalgorithmen auf dem TPMS-Sensor und der Zentraleinheit macht den Betrieb allgemein energieeffizienter und genauer. Die Fähigkeit zur Benachrichtigung über die Reifendrehzahl machen die Ausführungsformen der Erfindung von stark beeinflussenden Parametern wie unterschiedlichen Felgen, Felgengrößen und Montagemängel des TPMS-Sensors unabhängig.

## Patentansprüche

1. Verfahren zur Autolokalisierung von Sensoren (2) in oder an Fahrzeugen (3), insbesondere von TPMS-Sensoren (2), umfassend die Schritte
- Herstellen (G1, S1, S2) einer bidirektionalen Kommunikation zwischen einer Zentraleinheit (3) und zumindest einem Sensor (2),
- Ermitteln (G3, G4) von Trigger-Daten für die Autolokalisierung basierend auf Fahrzeugzustandsdaten, die der Zentraleinheit (3) bereitgestellt werden,
- Übermitteln (G4) der Trigger-Daten an den zumindest einen Sensor (2),
- Initiieren (G5) der Autolokalisierung durch die Zentraleinheit (3),
- Beginnen (SN1, SN2, SN3) der Ermittlung von Sensordaten für die Autolokalisierung durch den zumindest einen Sensor (2) nach dem Initiieren.
- Ermitteln (S4) der Position des zumindest einen Sensors (2) basierend auf den ermittelten Sensordaten,
**dadurch gekennzeichnet, dass** ein Zeitfenster zum Initiieren der Autolokalisierung ermittelt wird und anhand des ermittelten Zeitfenster eine Abtastrate für den Sensor (2) ermittelt wird, die dem Sensor (2) zur Ermittlung der Sensordaten mit der Abtastrate bereitgestellt wird.

2. Verfahren gemäß Anspruch 1, wobei die Abtastrate anhand von Fahrzeugzustandsdaten, insbesondere anhand von Fahrzeugbewegungsdaten ermittelt wird.

3. Verfahren gemäß einem der Ansprüche 1-2, wobei ein Übermitteln von Daten zwischen Sensor (2) und Zentraleinheit jeweils von der empfangenden Seite der Sendeseite bestätigt wird.

4. Verfahren gemäß einem der Ansprüche 1-3, wobei das Initiieren der Autolokalisierung anhand einer von der Zentraleinheit (3) dem Sensor (2) bereitgestellten Information, insbesondere eines Flags, erfolgt.

5. Verfahren gemäß einem der Ansprüche 1-4, wobei die Sensordaten des Sensors (2) solange an die Zentraleinheit (3) übermittelt werden, bis die Position des Sensors (2) mit vorgegebener Genauigkeit ermittelt wurde.

6. Verfahren gemäß einem der Ansprüche 1-5, wobei nach erfolgter Ermittlung der Position des Sensors (2) die bidirektionale Kommunikation abgeschaltet wird.

7. Verfahren gemäß einem der Ansprüche 1-6, wobei der Sensor (2) als Inertialmesssensor, insbesondere in Form eines Beschleunigungssensors und/oder eines Drehratensensors, bereitgestellt wird.

8. System (100) zur Autolokalisierung von Sensoren (2) in oder an Fahrzeugen (3), insbesondere von TPMS-Sensoren, umfassend
eine Zentraleinheit (3),
zumindest einen Sensor (2), insbesondere einen Beschleunigungs- und/oder Drehratensensor, wobei eine bidirektionale Kommunikation zwischen der Zentraleinheit (3) und dem zumindest einen Sensor (2) herstellbar ist, und wobei die Zentraleinheit (3) ausgebildet ist, Trigger-Daten für die Autolokalisierung basierend auf Fahrzeugzustandsdaten, die der Zentraleinheit (3) bereitgestellt werden, zu ermitteln, die Trigger-Daten an den zumindest einen Sensor (2) zu übermitteln, die Autolokalisierung basierend auf den Trigger-Daten, wobei der Sensor Sensordaten für die Autolokalisierung ermittelt zu initiieren, und die Position des zumindest einen Sensors (2) basierend auf ermittelten Sensordaten zu ermitteln, und wobei der zumindest eine Sensor (2) ausgebildet ist, Trigger-Daten von der Zentraleinheit (3) zu empfangen, Sensordaten für die Autolokalisierung zu ermitteln nach dem Initiieren und ermittelte Sensordaten an die Zentraleinheit (3) zu übertragen,
**dadurch gekennzeichnet, dass** die Zentraleinheit (3) ausgebildet ist, ein Zeitfenster zum Initiieren der Autolokalisierung zu ermitteln und anhand des ermittelten Zeitfenster eine Abtastrate für den Sensor (2) zu ermitteln und diese dem Sensor (2) zur Ermittlung der Sensordaten mit der Abtastrate bereitzustellen.

9. Fahrzeug mit einem System (100) gemäß Anspruch 8.

## Claims

1. Method for the auto-localization of sensors (2) in or on vehicles (3), in particular of TPMS sensors (2), comprising the steps of
- establishing (G1, S1, S2) bidirectional communication between a central processing unit (3) and at least one sensor (2),
- determining (G3, G4) trigger data for the auto-localization on the basis of vehicle state data delivered to the central processing unit (3),
- transferring (G4) the trigger data to the at least one sensor (2),
- initiating (G5) auto-localization by means of the central processing unit (3),
- starting (SN1, SN2, SN3) the determination of sensor data for the auto-localization by means of the at least one sensor (2) after the initiation,
- determining (S4) the position of the at least one sensor (2) on the basis of the determined sensor data,
**characterized in that** a time window for initiating auto-localization is determined and the determined time window is taken as a basis for determining a sampling rate for the sensor (2), which sampling rate is delivered to the sensor (2) for determining the sensor data at the sampling rate.

2. Method according to Claim 1, wherein the sampling rate is determined on the basis of vehicle state data, in particular on the basis of vehicle motion data.

3. Method according to either of Claims 1-2, wherein transfer of data between the sensor (2) and the central processing unit is confirmed to the transmitting party by the receiving party each time.

4. Method according to one of Claims 1-3, wherein the auto-localization is initiated on the basis of information, in particular a flag, delivered to the sensor (2) by the central processing unit (3).

5. Method according to one of Claims 1-4, wherein the sensor data of the sensor (2) are transferred to the central processing unit (3) until the position of the sensor (2) has been determined with a predefined accuracy.

6. Method according to one of Claims 1-5, wherein the bidirectional communication is switched off after the position of the sensor (2) has been determined.

7. Method according to one of Claims 1-6, wherein the sensor (2) is provided as an inertial measurement sensor, in particular in the form of an acceleration sensor and/or a rotation rate sensor.

8. System (100) for the auto-localization of sensors (2) in or on vehicles (3), in particular of TPMS sensors, comprising
a central processing unit (3),
at least one sensor (2), in particular an acceleration and/or rotation rate sensor, wherein bidirectional communication is able to be established between the central processing unit (3) and the at least one sensor (2), and wherein the central processing unit (3) is designed to determine trigger data for the auto-localization on the basis of vehicle state data delivered to the central processing unit (3), to transfer the trigger data to the at least one sensor (2), to initiate auto-localization on the basis of the trigger data, wherein the sensor determines sensor data for the auto-localization, and to determine the position of the at least one sensor (2) on the basis of determined sensor data, and wherein the at least one sensor (2) is designed to receive trigger data from the central processing unit (3), to determine sensor data for the auto-localization after the initiation and to transmit determined sensor data to the central processing unit (3),
**characterized in that** the central processing unit (3) is designed to determine a time window for initiating auto-localization and to take the determined time window as a basis for determining a sampling rate for the sensor (2) and to deliver said sampling rate to the sensor (2) for determining the sensor data at the sampling rate.

9. Vehicle having a system (100) according to Claim 8.

## Revendications

1. Procédé d'autolocalisation de capteurs (2) dans ou sur des véhicules (3), notamment des capteurs TPMS (2) comprenant les étapes consistant à
- établir (G1, S1, S2) une communication bidirectionnelle entre une unité centrale (3) et au moins un capteur (2),
- déterminer (G3, G4) des données de déclenchement pour l'autolocalisation sur la base de données d'état de véhicule qui sont fournies à l'unité centrale (3),
- transmettre (G4) les données de déclenchement audit au moins un capteur (2),
- lancer (G5) l'autolocalisation par l'unité centrale (3),
- commencer (SN1, SN2, SN3) la détermination des données de capteur pour l'autolocalisation par ledit au moins un capteur (2) après le lancement,
- déterminer (S4) la position dudit au moins un capteur (2) sur la base des données de capteur déterminées,
**caractérisé en ce qu'**une fenêtre temporelle servant à lancer l'autolocalisation est déterminée et **en ce que**, sur la base de la fenêtre temporelle déterminée, une fréquence d'échantillonnage est déterminée pour le capteur (2), laquelle est fournie au capteur (2) pour déterminer les données de capteur à la fréquence d'échantillonnage.

2. Procédé selon la revendication 1, dans lequel la fréquence d'échantillonnage est déterminée à partir de données d'état de véhicule, notamment à partir de données de déplacement du véhicule.

3. Procédé selon l'une quelconque des revendications 1 et 2, dans lequel chaque transmission de données entre le capteur (2) et l'unité centrale est confirmée au côté émission par le côté réception.

4. Procédé selon l'une quelconque des revendications 1 à 3, dans lequel le lancement de l'autolocalisation s'effectue à partir d'une information fournie par l'unité centrale (3) au capteur (2), notamment d'un drapeau.

5. Procédé selon l'une quelconque des revendications 1 à 4, dans lequel les données de capteur du capteur (2) sont transmises à l'unité centrale (3) jusqu'à ce que la position du capteur (2) ait été déterminée avec une précision prédéterminée.

6. Procédé selon l'une quelconque des revendications 1 à 5, dans lequel la communication bidirectionnelle est désactivée après que la position du capteur (2) a été déterminée.

7. Procédé selon l'une quelconque des revendications 1 à 6, dans lequel le capteur (2) est prévu comme capteur de mesure inertielle, notamment sous la forme d'un capteur d'accélération et/ou d'un capteur de vitesse de lacet.

8. Système (100) d'autolocalisation de capteurs (2) dans ou sur des véhicules (3), notamment des capteurs TPMS, comprenant
une unité centrale (3),
au moins un capteur (2), notamment un capteur d'accélération et/ou de vitesse de lacet, dans lequel une communication bidirectionnelle entre l'unité centrale (3) et ledit au moins un capteur (2) peut être établie, et dans lequel l'unité centrale (3) est conçue pour déterminer des données de déclenchement pour l'autolocalisation sur la base de données d'état de véhicule, qui sont fournies à l'unité centrale (3), pour transmettre les données de déclenchement audit au moins un capteur (2), pour lancer l'autolocalisation sur la base des données de déclenchement, le capteur déterminant des données de capteur pour l'autolocalisation, et pour déterminer la position dudit au moins un capteur (2) sur la base de données de capteur déterminées, et dans lequel ledit au moins un capteur (2) est conçu pour recevoir de l'unité centrale (3) des données de déclenchement, pour déterminer des données de capteur pour l'autolocalisation après le lancement et pour transmettre des données de capteur déterminées à l'unité centrale (3),
**caractérisé en ce que** l'unité centrale (3) est conçue pour déterminer une fenêtre temporelle servant à lancer l'autolocalisation et pour déterminer une fréquence d'échantillonnage pour le capteur (2) à partir de la fenêtre temporelle déterminée et pour fournir celle-ci au capteur (2) afin de déterminer les données de capteur à la fréquence d'échantillonnage.

9. Véhicule comprenant un système (100) selon la revendication 8.
